# EUROPEAN PATENT APPLICATION

(11) **EP 2 523 151 A1**
(43) Date of publication of application: **14.11.2012**
(21) Application number: 12167352.9
(22) Date of filing: 09.05.2012
(51) Int. Cl.: G06Q 10/00, G06Q 50/00, G06Q 30/02

(54) **Systems and methods for managing transaction data**

(30) Priority: 13.05.2011 US 201113106955
(71) Applicant: General Electric Company, Schenectady, NY 12345 (US)
(72) Inventor: Ree, Bradley Richard, Atlanta, GA 30339-8402 (US); Boot, John Christopher, Atlanta, GA 30339-8402 (US); Alexander, George William, Atlanta, GA 30339-8402 (US)
(74) Representative: Picker, Madeline Margaret

(57) **Abstract**

A system (100) for use in managing charge station transaction data (122) is provided. The system includes at least one charging station (102) and a billing server (104) coupled in communication with the at least one charging station. The billing server is configured to receive transaction data from the at least one charging station, consolidate the transaction data, and transmit the consolidated transaction data (130) to an electronic payment processor (106).

## Description

### BACKGROUND OF THE INVENTION

The subject matter disclosed herein relates generally to electric vehicles, and more specifically, to systems and methods for use in managing transaction data for electric vehicle charging stations.

In response to increasing fuel costs related to the use of conventional combustion engine vehicles and further in response to heightened environmental concerns, including air pollution, the use of electric vehicles has increased. To function properly, electric vehicles must be periodically recharged. Owners of electric vehicles may use charging stations, located at the owner's residence, or at a commercial site, to replenish the charge on the battery of their electric vehicle. When a consumer uses a commercial charging station, the consumer may purchase electrical energy using a variety of methods, including cash, check, and/or an electronic payment card, such as a credit and/or debit card.

The operator of the commercial charging station typically pays a surcharge fee to a payment card company for each transaction that involves an electronic payment card issued by the company. This surcharge fee is generally fixed, regardless of the amount of a consumer's purchase. Accordingly, in known payment systems, small consumer charges and/or micropayments are less profitable to charging station operators, as the surcharge paid to the payment card company is the same, regardless of the amount of energy purchased by the consumer. Moreover, transmitting separate information for each individual transaction can be burdensome and time-consuming for both the charging station operator and the payment card company.

### BRIEF DESCRIPTION OF THE INVENTION

In one aspect, a system for use in managing charge station transaction data is provided. The system includes at least one charging station and a billing server coupled in communication with the at least one charging station. The billing server is configured to receive transaction data from the at least one charging station, consolidate the transaction data, and transmit the consolidated transaction data to an electronic payment processor.

In another aspect, a billing server for use in managing charge station transaction data is provided. The billing server includes a communication device configured to receive a plurality of transaction data from at least one charging station, a memory device configured to store the plurality of transaction data received from the at least one charging station, and a processor configured to consolidate the plurality of transaction data received from the at least one charging station, the communication device further configured to transmit the consolidated transaction data to an electronic payment processor.

In yet another aspect, a method for use in managing charge station transaction data is provided. The method includes receiving, at a billing server, transaction data for a plurality of transactions from at least one charging station, consolidating, using a processor, the transaction data from the plurality of transactions, and transmitting the consolidated data to an electronic payment processor.

### BRIEF DESCRIPTION OF THE DRAWINGS

Fig. 1 is a block diagram of an example payment system for use with electric vehicle charging stations.
Fig. 2 is a block diagram of an example billing server that may be used with the payment system shown in Fig. 1.
Fig. 3 is a flowchart of an example method that may be used with the example payment system shown in Fig. 1.

### DETAILED DESCRIPTION OF EMBODIMENTS OF THE INVENTION

The systems and methods described herein facilitate processing and transmitting transaction data for electric vehicle charging stations. A payment system is provided that includes a billing server that consolidates transaction data for a plurality of payment card transactions. More specifically, the system provided herein enables the consolidated transaction data to be transmitted at one time, rather than transmitting individual transaction data for each transaction to an electronic payment processor.

Technical features of the methods and systems described herein include at least one of: (a) receiving transaction data for a plurality of transactions from at least one charging station; (b) consolidating the transaction data from the plurality of transactions; and (c) transmitting the consolidated transaction data to an electronic payment processor.

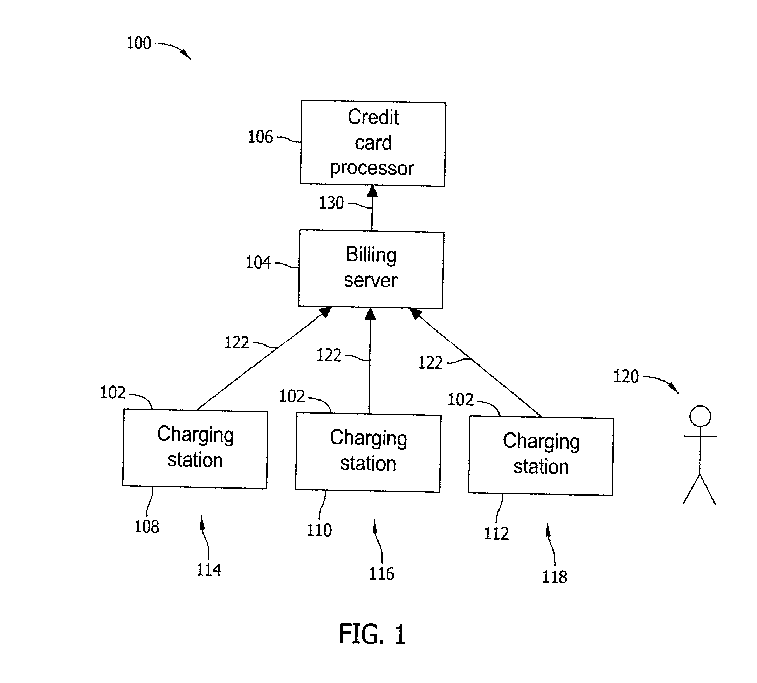

Fig. 1 is a block diagram of an example payment system 100 that may be used with electric vehicle charging stations 102. In addition to a plurality of charging stations 102, payment system 100 also includes a billing server 104 and an electronic payment processor 106. In the example embodiment, system 100 includes a first charging station 108, a second charging station 110, and a third charging station 112. Alternatively, system 100 may include any number of charging stations 102 that enable system 100 to function as described herein.

Each charging station 102 includes a coupler/connector (not shown) that enables energy to be supplied to an electric vehicle (not shown). In the example embodiment, first charging station 108 is located at a first location 114, second charging station 110 is located at a second location 116, and third charging station 112 is located at a third location 118. Locations 114, 116, and 118 may be any location including, but not limited to, residential structures including houses and/or garages, commercial structures including parking lots, garages, and/or parking structures, municipal locations including parking lots, garages, parking structures, and/or street parking spots, or any other location where electric vehicle charging could be performed. Moreover, locations 114, 116, and 118 may be in relatively close proximity to one another and/or may be distributed across a large region, such as statewide and/or nation-wide.

As used herein, an electric vehicle includes any vehicle that includes one or more electric motors used for propulsion. Energy used to propel electric vehicles may come from various sources, such as, but not limited to, an on-board rechargeable battery and/or an on-board fuel cell. In one embodiment, the electric vehicle is a hybrid electric vehicle, which captures and stores energy generated, for example, by braking. Moreover, a hybrid electric vehicle uses energy stored in an electrical source, such as a battery, to continue operating when idling to conserve fuel. Some hybrid electric vehicles are capable of recharging the battery by plugging into a power receptacle, such as a power outlet. Accordingly, the term "electric vehicle" as used herein may refer to a hybrid electric vehicle or any other vehicle that receives electrical energy.

To increase the amount of energy stored in an electric vehicle, a consumer 120 connects the electric vehicle to charging station 102 to operate charging station 102. In the example embodiment, consumer 120 purchases the electrical energy obtained from charging station 102. For example, a consumer 120 may purchase electrical energy from a station 102 using an electronic payment card. As used herein, an electronic payment card includes a credit card, a debit card, and/or any other payment method that enables system 100 to function as described herein.

In the example embodiment, charging stations 108, 110, and 112 are each coupled to billing server 104. When consumer 120 purchases energy using an electronic payment card, transaction data 122 is transmitted to billing server 104. Transaction data 122 includes any information related to the energy purchased by consumer 120, including, but not limited to, a quantity of electrical energy purchased, a value of electrical energy purchased, and/or electronic payment card information.

When consumer 120 purchases electrical energy from charging station 102, the transaction may constitute a micropayment. As used herein, a micropayment is a transaction that involves a relatively small amount of money. For example, in one embodiment, all transactions that involve a purchase of energy under $50 are considered a micropayment. Accordingly, in some embodiments, transaction data 122 includes micropayment data. By consolidating and transmitting transaction data 122 related to micropayments, as described herein, an amount of any fixed surcharge fees payable by an owner of charging station 102 and/or billing server 104 is reduced. Accordingly, micropayment transactions may be more profitable to the owner of charging station 102 and/or billing server 104. In the example embodiment, the same entity that owns and operates charging stations 102 maintains and operates billing server 104. Alternatively, billing server 104 may be operated by any entity that enables system 100 to function as described herein. Billing server 104 receives and consolidates transaction data 122 from charging stations 102, as described in detail herein.

Billing server 104 is coupled to electronic payment processor 106. Electronic payment processor 106 receives consolidated transaction data 130 from billing server 104, as described in detail herein. In the example embodiment, an electronic payment card company operates and maintains electronic payment processor 106. Alternatively, electronic payment processor 106 may be operated and maintained by any entity that enables system 100 to perform as described herein.

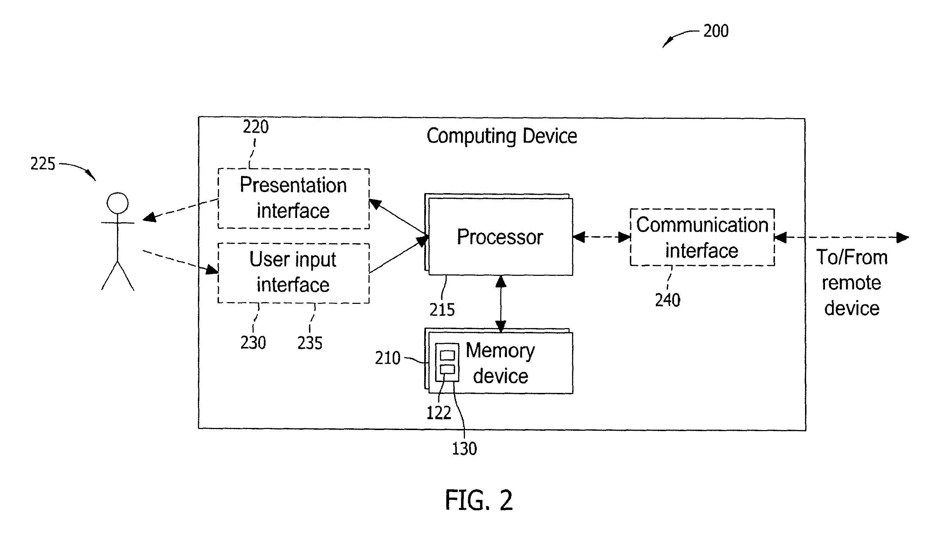

Fig. 2 is a block diagram of an example billing server 200 that may be implemented in payment system 100 (shown in Fig. 1). In the example embodiment, billing server 200 includes a memory device 210 and a processor 215 coupled to memory device 210 for executing instructions. In some embodiments, executable instructions are stored in memory device 210. Billing server 200 performs one or more operations described herein by programming processor 215. For example, processor 215 may be programmed by encoding an operation as one or more executable instructions and providing the executable instructions in memory device 210. Processor 215 may include one or more processing units (e.g., in a multi-core configuration).

Processor 215 may include, but is not limited to, a general purpose central processing unit (CPU), a graphics processing unit (GPU), a microcontroller, a reduced instruction set computer (RISC) processor, an application specific integrated circuit (ASIC), a programmable logic circuit (PLC), and/or any other circuit or processor capable of executing the functions described herein. The methods described herein may be encoded as executable instructions embodied in a non-transitory computer readable medium, including, without limitation, a storage device and/or a memory device. Such instructions, when executed by a processor, cause the processor to perform at least a portion of the methods described herein. The above examples are example only, and thus are not intended to limit in any way the definition and/or meaning of the term processor.

Memory device 210 includes one or more devices that enable information such as executable instructions and/or other data to be stored and retrieved. Memory device 210 may include one or more computer readable media, such as, without limitation, dynamic random access memory (DRAM), static random access memory (SRAM), a solid state disk, and/or a hard disk. Memory device 210 may be configured to store, without limitation, application source code, application object code, source code portions of interest, object code portions of interest, configuration data, execution events, and/or any other type of data.

In some embodiments, billing server 200 includes a presentation interface 220 that is coupled to processor 215. Presentation interface 220 presents information, such as application source code and/or execution events, to a billing server operator 225. For example, presentation interface 220 may include a display adapter (not shown) that may be coupled to a display device, such as a cathode ray tube (CRT), a liquid crystal display (LCD), an organic light emitting diode (OLED) display, and/or an "electronic ink" display. In some embodiments, presentation interface 220 includes one or more display devices.

In some embodiments, billing server 200 includes an input interface 230, such as an operator interface 235. In the example embodiment, operator interface 235 is coupled to processor 215 and receives input from operator 225. Operator interface 235 may include, for example, a keyboard, a pointing device, a mouse, a stylus, a touch sensitive panel, a touch pad, a touch screen, a gyroscope, an accelerometer, a position detector, and/or an audio user input interface. A single component, such as a touch screen, may function as both a display device of presentation interface 220 and operator interface 235. In the example embodiment, billing server 200 includes a communication interface 240 configured to communicate with charging stations 102 and/or electronic payment processor 106.

Billing server 200 consolidates transaction data 122 received from charging stations 102. More specifically, billing server 200 receives transaction data 122 for a plurality of transactions at charging stations 102. In the example embodiment, billing server receives transaction data 122 from first charging station 108, second charging station 110, and third charging station 112. In the example embodiment, memory device 210 stores transaction data 122 received from charging stations 102. Processor 215 then consolidates transaction data 122 from a particular transaction with other transaction data 122 to form consolidated transaction data 130. For example, processor 215 may consolidate transaction data 122 from a transaction at first charging station 108 with transaction data 122 from a transaction at third charging station 112. Processor 215 may consolidate transaction data 122 by merging transaction data 122 from multiple transactions into a single data file stored in memory device 210, or may consolidate transaction data 122 by linking transaction data 122 from multiple transactions. Alternatively, processor 215 may consolidate transaction data 122 in any manner that enables system 100 to function as described herein.

Processor 215 instructs communication interface 240 to transmit consolidated transaction data 130 to electronic payment processor 106. In the example embodiment, processor 215 instructs communication interface 240 to transmit consolidated transaction data 130 on a periodic basis. For example, consolidated transaction data 130 may be transmitted at the end of a billing period, such as monthly, quarterly, and/or yearly. Alternatively, consolidated transaction data 130 may be transmitted at the end of any period that enables system 100 to perform as described herein. As processor 215 consolidates transaction data 122, billing server 200 reduces an overall number of transmissions of transaction data 122 to electronic payment processor 106.

In an alternate embodiment, processor 215 instructs communication interface 240 to transmit consolidated transaction data 130 to electronic payment processor 106 when transaction data 122 stored in memory device 210 is for a predetermined number of transactions. For example, billing server 200 may transmit consolidated transaction data 130 to electronic payment processor 106 each time billing server receives and consolidates transaction data 122 for one hundred transactions.

In yet another embodiment, processor 215 instructs communication interface 240 to transmit consolidated transaction data 130 to electronic payment processor 106 after a predetermined value of electrical energy has been purchased at charging stations 102. For example, billing server 200 may transmit consolidated transaction data 130 to electronic payment processor 106 whenever billing server 200 receives transaction data 122 totaling over $10,000 in energy purchased from charging stations 102. Alternatively, processor 215 may instruct communication interface 240 to transmit consolidated transaction data 130 to electronic payment processor 106 after a predetermined quantity of electrical energy has been purchased at charging stations 102.

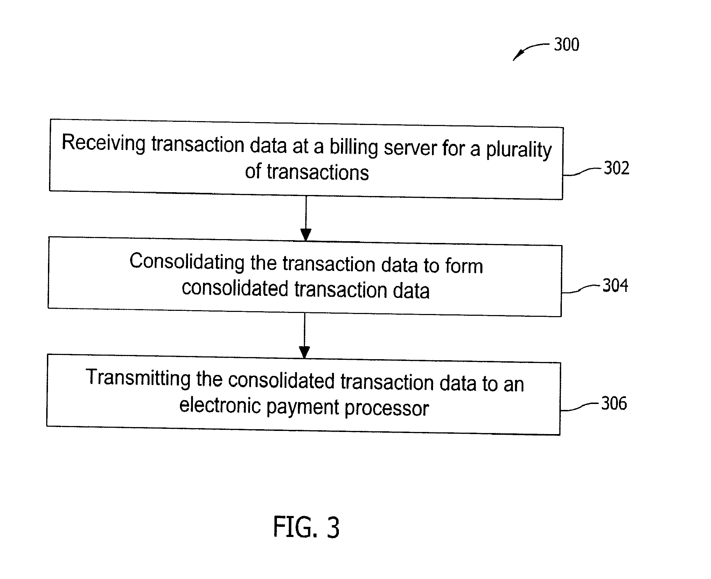

Fig. 3 is a flow chart of an example method 300 that may be used to manage transaction data for at least one charging station 102. Method 300 includes receiving 302, at a billing server 104, transaction data 122 for a plurality of transactions from charging station 102. Method 300 further includes consolidating 304, using a processor, such as processor 215 (shown in Fig. 2), the received transaction data 122 to form consolidated transaction data 130 and then transmitting 306 consolidated transaction data 130 to an electronic payment processor 106.

As compared to known billing systems and methods for charging stations, the systems and methods described herein enable a charging station to be operated more profitably for the owner of the charging station. More specifically, in known billing systems, transaction data for each transaction is transmitted individually, and a surcharge is imposed for each transmission. Using the systems and methods described herein, transaction data from a plurality of transactions is consolidated into consolidated transaction data at a billing server. The consolidated transaction data is then transmitted in a single transmission. Accordingly, in the methods and systems described herein, as fewer overall transmissions are made to the electronic payment processor, fewer surcharges are imposed on the owner of the charging station and/or billing server. Further, as compared to known billing systems, the methods and systems described herein simplify processing and management of transaction data, as one transmission of consolidated transaction data is simpler to process than multiple transmissions generated every time an individual transaction takes place.

The systems and methods described herein facilitate processing and transmitting transaction data for electric vehicle charging stations. A payment system is provided that includes a billing server that consolidates transaction data for a plurality of payment card transactions. More specifically, the system provided herein enables the consolidated transaction data to be transmitted at one time, rather than transmitting individual transaction data for each transaction to an electronic payment processor.

Example embodiments of systems and methods for managing transaction data are described above in detail. The systems and methods described herein are not limited to the specific embodiments described herein, but rather, components of the systems and/or steps of the methods may be utilized independently and separately from other components and/or steps described herein. For example, the methods and systems described herein may have other applications not limited to practice with electric vehicle charging stations, as described herein. Rather, the methods and systems described herein can be implemented and utilized in connection with various other industries.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A system (100) for use in managing charge station transaction data (122), said system comprising:
at least one charging station (102); and
a billing server (104) coupled in communication with said at least one charging station, said billing server configured to:
receive transaction data from said at least one charging station;
consolidate the transaction data; and
transmit the consolidated transaction data (130) to an electronic payment processor (106).

2. A system (100) in accordance with Claim 1, wherein said billing server (104) is configured to transmit consolidated transaction data (130) to the electronic payment processor (106) on a periodic basis to facilitate reducing an overall number of transmissions of transaction data (122) to the electronic payment processor.

3. A system (100) in accordance with Claim 1 or Claim 2, wherein said billing server (104) is configured to transmit the consolidated transaction data (130) to the electronic payment processor (106) when a predetermined amount of transaction data (122) is received at said billing server.

4. A system (100) in accordance with Claim 1, 2 or 3, wherein said billing server (104) is configured to transmit the consolidated transaction data (130) to the electronic payment processor (106) when transaction data (122) associated with a predetermined value of energy is received at said billing server.

5. A system (100) in accordance with any one of Claims 1 to 4, wherein said billing server (104) is configured to transmit the consolidated transaction data (130) to the electronic payment processor (106) when transaction data (122) associated with a predetermined quantity of energy is received at said billing server.

6. A system (100) in accordance with any one of Claims 1 to 5, wherein the transaction data (122) includes micropayment data.

7. A system (100) in accordance with any one of Claims 1 to 6, wherein the transaction data (122) includes at least one of a quantity of electrical energy purchased, a value of electrical energy purchased, and electronic payment card information.

8. A system (100) in accordance with any one of Claims 1 to 7, wherein said at least one charging station (102) comprises a first charging station (108) and a second charging station (110), said first charging station is located at a first location (114), said second charging station is located at a second location (116) that is different from the first location.

9. A billing server (104) for use in managing charge station transaction data (122), said billing server comprising:
a communication device (240) configured to receive a plurality of transaction data from at least one charging station (102);
a memory device (210) configured to store the plurality of transaction data received from the at least one charging station; and
a processor (215) configured to consolidate the plurality of transaction data received from the at least one charging station, the communication device further configured to transmit the consolidated transaction data (130) to an electronic payment processor (106).

10. A billing server (104) in accordance with Claim 9, wherein said processor (215) is configured to instruct said communication device (240) to transmit the consolidated data (130) to the electronic payment processor (106) on a periodic basis to facilitate reducing an overall number of transmissions of transaction data to the electronic payment processor.

11. A billing server (104) in accordance with Claim 9 or Claim 10, wherein said processor is configured to instruct said communication device to transmit the consolidated transaction data to the electronic payment processor (106) when a predetermined amount of transaction data is received at said billing server (104).

12. A billing server (104) in accordance with Claim 9, 10 or 11, wherein said processor is configured to instruct said communication device to transmit the consolidated transaction data to the electronic payment processor (106) when transaction data associated with a predetermined value of energy is received at said billing server (104).

13. A billing server (104) in accordance with any one of Claims 9 to 12, wherein said processor is configured to instruct said communication device to transmit the consolidated transaction data to the electronic payment processor (106) when transaction data associated with a predetermined quantity of energy is received at said billing server (104).

14. A billing server (104) in accordance with any one of Claims 9 to 13, wherein the transaction data includes at least one of a quantity of electrical energy purchased, a value of electrical energy purchased, and electronic payment card information.

15. A method for use in managing charge station transaction data, said method comprising:
receiving, at a billing server (104), transaction data for a plurality of transactions from at least one charging station (102);
consolidating, using a processor, the transaction data from the plurality of transactions; and
transmitting the consolidated data to an electronic payment processor (106).
